Europäisches Patentamt

European Patent Office

Office européen des brevets

(19)

(11) Veröffentlichungsnummer: **0 001 610**
**B1**

(12) # EUROPÄISCHE PATENTSCHRIFT

(21) Anmeldenummer: **78101113.5**

(22) Anmeldetag: **10.10.78**

(51) Int. Cl.³: **D 21 J 3/00, B 29 J 5/00, B 32 B 27/12**

(54) **Verfahren zum Herstellen eines eine Kunststoffabdeckung aufweisenden Formkörpers aus einer wasserhaltigen Faserstoffmasse**

(30) Priorität: **21.10.77 DE 2747242**

(43) Veröffentlichungstag der Anmeldung:
**02.05.79 Patentblatt 79/09**

(45) Bekanntmachung des Hinweises auf die Patenterteilung:
**03.09.80 Patentblatt 80/18**

(84) Benannte Vertragsstaaten:
**BE CH DE FR GB LU NL SE**

(56) Entgegenhaltungen:
**DE - B - 2 333 750**
**DE - C - 605 605**
**DE - C - 886 562**

(73) Patentinhaber: **BASF Farben + Fasern Aktiengesellschaft**
**Am Neumarkt 30**
**D - 2000 Hamburg 70 (DE)**

(72) Erfinder: **Hoffmann, Karl, Ing.grad**
**Breslauer Strasse 2**
**D - 5159 Sindorf (DE)**

(74) Vertreter: **Habbel, Hans-Georg, Dipl.-Ing.**
**Postfach 3429 Am Kanonengraben 11**
**D - 4400 Münster (DE)**

Courier Press, Leamington Spa, England.

# Verfahren zum Herstellen eines eine Kunststoffabdeckung aufweisenden Formkörpers aus einer wasserhaltigen Faserstoffmasse

Die Erfindung bezieht sich auf ein Verfahren zum Herstellen eines eine Kunststoffabdeckung aufweisenden Formkörpers aus einer wasserhaltigen, sauer eingestellten, mit Natur- und/oder Kunstharzen imprägnierten Faserstoffmasse aus Fasermaterialien auf Basis von Zellulosefasern, Holzfasern, Holzschliff, Papierfasern, Wollfasern, Baumwollfasern, Haaren, Synthesefasern, Glasfasern, Asbestfasern oder deren Mischungen als Rohpreßlinge oder in Formzuschnitten in gewebter und/oder ungewebter Form, bei dem das Wasser aus der Faserstoffmasse durch Vakuum entfernt wird, die Formgebung unter Aushärtung des Harzes durch Heißpressen vorgenommen wird und die Kunststoffabdeckung aufgebracht wird.

Aus der DE—AS 23 33 750 ist ein Verfahren zum Herstellen beschichteter oder lackierter Formkörper bekannt. Hierbei werden wasserhaltige Faserstoffmassen auf eine pH-Wert zwischen 1 und 6,9 eingestellt und mit einer alkalisch reagierenden, einen pH-Wert zwischen 7,1 und 12 aufweisenden wäßrigen Dispersion oder Lösung von duroplastische Filme bildenden Bindemitteln, die ggf. übliche Pigmente, farbgebende Substanzen, Füllstoffe und andere Zusatzstoffe enthalten, beschichtet.

Danach erfolgt die Härtung und Formgebung unter Anwendung von Druck und Hitze. Solche Formkörper können unter Verwendung eines Kaschierklebers mit einer Kunststoff-Folie kaschiert werden. Dies geschieht in der Regel bei planen Formkörpern durch einen Walzprozeß unter Druck und Hitze. Die bisher verwendeten Kaschierkleber sind lösungsmittelhaltig und haben den Nachteil, daß aufwendige Einrichtungen erforderlich sind, um die abdunstenden Lösungsmittel aus der Luft zu entfernen. Außerdem lassen sich nur plane Flächen mit Folie kaschieren. Ein solches Verfahren erfordert mehrere Arbeitsgänge.

Der Erfindung liegt die Aufgabe zugrunde, ein Verfahren der eingangs genannten Art zu schaffen, das praktisch in einem einzigen Arbeitsgang durchführbar ist und bei dem demgemäß während der Herstellung des Formkörpers die Kunststoffabdeckung sich festhaftend mit dem Formkörper aus Faserstoffmatten verbindet. Das Verfahren soll zur Herstellung beliebig geformter Formkörper einsetzbar sein.

Diese Aufgabe wird gemäß der Erfindung dadurch gelöst, daß als Kunststoffabdeckung eine Kunststoffolie aus Polyvinylchlorid, Polyvinylidenchlorid, Polyäthylen, Polypropylen oder Mischpolymerisaten aus Polyäthylen und Polypropylen zum Einsatz kommt und daß diese vor dem Entfernen des Wassers und der Formgebung auf den Rohpreßling oder den Formzuschnitt aufgelegt wird, nachdem dieser naß-in-naß mit einer alkalisch eingestellten wässrigen Dispersion oder Emulsion oder Lösung von duroplastische Filme bildenden Bindemitteln aus der Gruppe der Polyurethanharze beschichtet wurde.

Hierbei werden die zur Aushärtung des Formkörpers notwendigen Parameter Vakuum, Druck und Hitze und gegebenenfalls Verformung dazu benutzt, um den Rohpreßling in einem Arbeitsgang mit der Kunstoff-Folie zu verpressen und gleichzeitig auszuhärten. Neben der Einsparung an Zeit und Arbeitsaufwand zeichnet sich der erhaltene Formkörper dadurch aus, daß die Kunststoff-Folie ungewöhnlich fest mit der Unterlage verbunden ist. Außerdem werden bei dem gesamten Verfahren keine lösungsmittelhaltigen Produkte verwendet, sondern nur umweltfreundliche, wasserenthaltende Stoffe.

Mit dem erfindungsgemäßen Verfahren können beliebige Formen und Flächen mit verschieden großen Vertiefungen mit der Kunststoff-Folie bedeckt werden. Hierbie hat sich herausgestellt, daß ein Verpressen unter Anwendung nur von Druck und Hitze nicht ausreicht, um die Folie mit dem Rohpreßling zu verbinden. Die vor dem Preßvorgang eingeschaltete Verfahrensstufe der Vakuumbehandlung soll nicht nut die Feuchtigkeit aus dem Preßling entfernen, sondern ermöglicht es, daß die Kunststoff-Folie fest und das Faserstoffteil angesaugt und besonders in die Vertiefungen hineingezogen wird, so daß eine besonders gute Verankerung zum Untergrund entsteht.

Zur Durchführung des erfindungsgemäßen Verfahrens wird so verfahren, daß man die wasserhaltigen und mit Imprägnierharz durchtränkten, verfilzten Faserstofflagen, die nach dem Abgautschen der Flüssigkeit aus der wäßrigen Holzfaserstoff-Suspension zurückbleiben und die auf einen pH-Wert im sauren Bereich eingestellt sind, direkt naß-in-naß mit einer wäßrigen Dispersion oder Emulsion oder wäßrigen Lösung von duroplastische Filme bildenden Bindemitteln aus der Gruppe der Polyurethanharze beschichtet und diese Schicht mit einer thermoplastischen Kunststoff-Folie abdeckt. Im Augenblick des Auftreffens der Dispersion, Emulsion oder Lösung auf die wasserhaltige, saure Fasermasse tritt an der Grenzfläche ein pH-Sprung ein, der eine sofortige Oberflächenkoagulation des Harzes aus der Dispersion, Emulsion oder Lösung und der Grenzfläche bewirkt. Diese koagulierte Schicht wirkt als Sperrschicht und bleibt auf der Fasermasse stehen und mischt sich nicht mit dieser bzw. fließt nicht in diese ein. Dadurch wirkt diese Schicht auf die Kunststoff-Folie wie eine Klebschicht. Der sich anschließende Verfahrensschritt der Entfernung des Wassers durch Vakuum bewirkt, daß das koagulierte Harz mit der Kunststoff-Folie fest in die Poren der Fasermasse hineingezogen und verankert wird. Der sich and die Vakuumbehandlung anschließende, unter Hitzeeinwirkung und Druck ablaufende Preßvorgang liefert dann einen ausgehärteten Formkörper, auf dem die Kunststoff-Folie festhaftend verbunden ist und die sich in jede Vertiefung und an jede beliebige Form des Formkörpers angepaßt hat.

Geht man bei der Herstellung der Formkörper von den mit Natur- und/oder Kunstharz imprägnierten Faserstofftrockengeweben aus, die mit Wasserdampf aufgedämpft werden, so erfolgt die Beschichtung mit der wäßrigen Dispersion oder Emulsion oder der wäßrigen Lösung der duroplastische Filme bildenden Bindemittel aus der Gruppe der Polyurethanharze nach dem Dämpfen, wonach dann mit Folie abgedeckt und mittels Vakuum und Heißverpressung weitergearbeitet wird.

In manchen Fällen ist es zweckmäßig, vor dem Preßvorgang ein Trennmittel in die Form einzubringen, wonach der ausgehärtete Formkörper sich ohne Schwierigkeiten aus der Preßform lösen läßt. Der nach dem erfindungsgemäßen Verfahren hergestellte Formkörper enthält eine Folienabdeckung, die außerordentlich fest mit dem Formkörper verbunden ist. Die extrem gute Haftung der Kunststoff-Folie verbessert die Qualität des Endproduktes wesentlich, abgesehen von der rationelleren und kostensparenden Arbeitsweise des erfindungsgemäßen Verfahrens. Dadurch wird die Anwendungsbreite dieser Formkörper vergrößert, was einen beträchtlichen technischen Fortschritt darstellt. Formkörper dieser Art werden beispielsweise als Wandverkleidungen in Autokarossen oder für Hutablagen verwendet.

Die zum Beschichten der wasserfeuchten Faserstoffmassen benötigten wäßrigen Dispersionen und/oder Emulsionen und/oder Lösungen von duroplastische Filme bildenden Bindenmitteln können in ihrer Zusammensetzung in weiten Grenzen variieren. Geeignet sind alle wäßrigen Dispersionen, Emulsionen oder Lösungen, deren Bindemittel der Gruppe der Polyurethanharze zuzuordnen sind und die unter den Bedingungen der Heißverpressung vernetzen, und zwar allein oder in Mischung mit den zugehörigen Härtungsmitteln oder Vernetzungsmitteln. Die Dispersionen oder Lösungen werden durch Zusatz von Ammoniak, Aminen oder Alkalien stabilisiert und alkalisch gemacht, wobei der pH-Wert im Bereich zwischen pH 7,1 und pH 12 liegen soll. Besonders gute Ergebnisse werden erhalten mit Emulsionen aus vorvernetzten Polyesterpolyurethanen mit hohem Kristallisationswert, die auf einen pH-Wert von etwa 8 eingestellt sind.

Die zur Beschichtung geeigneten Dispersionen oder Lösungen können die üblichen Pigmente, wie z.B. Titandioxid-, Zinksulfid-, Eisenoxidpigmente, Ruß oder organische Pigmente sowie Füllstoffe, wie Kreide, Bariumsulfat, Talkum, Quarzmehl usw. sowie wasserlösliche Farbstoffe und sonstige Zusatzstoffe , wie Verlaufmittel, Verdickungsmittel, Antischaummittel, Stabilisatoren enthalten.

Der Auftrag der wäßrigen Dispersion und/oder Lösung von duroplastische Filme bildenden Bindemitteln erfolgt in üblicher Weise mit den in der Lackiertechnik gebräuchlichen Methoden. Zweckmäßigerweise werden zur Durchführung einer kontinuierlichen Beschichtung in den vorhandenen Bandstraßen zur Herstellung der heiß verpreßten Formkörper Auftragseinrichtungen, wie beispielsweise eine Spritzautomatik oder eine Gießmaschine, eingebaut. Hier kann dann der Rohpreßling automatische mit dem Bindemittel naß-in-naß beschichtet werden. Auf die feuchte Beschichtung wird dann die thermoplastische Kunststoff-Folie aufgelegt und das Preßteil wird sofort automatisch einer geheizten Vakuum-Presse weiter zugeführt.

Die Auftragsmenge der wäßrigen Dispersion oder Lösung kann innerhalb weiter Grenzen schwanken. Sie ist abhängig von der Art der verwendeten Dispersion und/oder Lösung und der Beschaffenheit der faserigen Unterlage. Es können zwischen 50 g und 450 g/m² aufgebracht werden.

Für die Kunststoffabdeckung werden Kunststoff-Folien aus Polyvinylchlorid, Polyvinylidenchlorid, Polyäthylen, Polypropylen oder Mischpolymerisate aus Polyäthylen und Polypropylen verwendet. Die besten Resultate werden mit sogenannten Weich-PVC-Folien erzielt. Die Folien werden in einer Schichtdicke bis zu 200 $\mu$m eingesetzt. Sie können farblos, aber such farbig eingefärbt sein.

Die Vakuum-Behandlung sowie die Formgebung und die Härtung der mit der thermoplastischen Folie abgedeckten, beschichteten Faserstoffmassen erfolgt in üblichen Heißpressen. Der Preßdruck beträgt bei Hochdruckpressen zwischen 200 und 250 kg pro cm². Die zum Verpressen notwendigen Temperaturen richten sich nach der Natur des zur Verpressung kommenden Imprägnierharzes und betragen zwischen 80 und 100°C. Man rechnet in der Regel mit einer Härtezeit bis zu 80 Sekunden pro Millimeter Wandstärke.

Beispiel

Ein durch Gautschwalzen weitgehend entwässertes Faservlies aus Cellulosefasern, das mit Harnstoffharz imprägniert ist und einen pH-Wert von 3,5 bis 4 besitzt, wird als Rohpreßteil in einer Bandstraße einer eingebauten Spritzautomatik zugeführt und automatisch mit 200g pro m² einer wäßrigen Kunstharzemulsion spritzlackiert. Auf die feuchte Beschichtung wird eine Weich-PVC-Folie, die eine Schichtdicke von ca. 150 $\mu$m besitzt und blau durchgefärbt ist, aufgelegt und dann das Rohpreßteil automatisch einer beheizten Vakuumpresse zugeführt. Während des Entfernens der Feuchtigkeit durch das Vakuum wird gleichzeitig die Folie fest an das Faserstoffteil angesaugt. Nach der Vakuumbehandelung wird dann in der Presse innerhalb von 60 Sekunden bei 100°C und einem Preßdruck von 200kg pro cm² zu einem Formteil ausgehärtet und anschließend beschnitten.

Die Kunstharzemulsion besteht aus

4,0 Gewichtsteilen Äthylcellulose-Lösung 5%ig in Wasser

9,0 Gewichtsteilen Wasser

0,2 Gewichtsteilen Tetrakalium-Pyrophosphat

0,2 Gewichtsteilen eines handelsüblichen wassermischbaren Entschäumungsmittels

0,3 Gewichtsteilen eines Tensides

4,0 Gewichtsteilen eines wasserlöslichen blauen Farbstoffes

82,3 Gewichtsteilen einer 40%igen wäßrigen handelsüblichen Emulsion eines Polyesterpolyurethans mit hohem Kristallisationswert, die einen pH-Wert von 8 besitzt.

Das erhaltene gepreßte Formteil hat einen blauen Kunststoffüberzug und ist als Wandverkleidung in Autokarossen verwendbar.

**Patentanspruch**

Verfahren zum Herstellen eines eine Kunststoffabdeckung aufweisenden Formkörpers aus einer wasserhaltigen, sau~r eingestellten, mit Natur- und/oder Kunstharzen imprägnierten Faserstoffmasse aus Fasermaterialien auf Basis von Zellulosefasern, Holzfasern, Holzschliff, Papierfasern, Wollfasern, Baumwollfasern, Haaren, Synthesefasern, Glasfasern, Asbestfasern oder deren Mischungen als Rohpreßlinge oder in Formzuschnitten in gewebter und/oder ungewebter Form, bei dem das Wasser aus der Faserstoffmasse durch Vakuum entfernt wird, die Formgebung unter Aushärtung des Harzes durch Heißpressen vorgenommen wird und die Kunststoffabdeckung aufgebracht wird, *dadurch gekennzeichnet,* daß als Kunststoffabdeckung eine Kunststoff-Folie aus Polyvinylchlorid, Polyvinylidenchlorid, Polyäthylen, Polypropylen oder Mischpolymerisaten aus Polyäthylen und Polypropylen zum Einsatz kommt und daß diese vor dem Entfernen des Wassers und der Formgebung auf den Rohpreßling oder den Formzuschnitt aufgelegt wird, nachdem dieser naß-in-naß mit einer alkalisch eingestellten wäßrigen Dispersion oder Emulsion oder Lösung von duroplastische Filme bildenden Bindemitteln aus der Gruppe der Polyurethanharze beschichtet wurde.

**Claim**

A method of producing a moulding having a plastics covering and composed of a water-containing mass of fibrous material impregnated with natural and/or synthetic resins and adjusted to acidity, the said mass being composed of fibrous materials based on cellulose fibres, wood fibres, wood pulp, paper fibres, wool fibres, cotton fibres, hairs, synthetic fibres, glass fibres, asbestos fibres, or mixtures thereof, as a rough pressing or moulding blank in woven and/or non-woven form, the method comprising removing water by vacuum from the mass of fibrous material, and shaping and curing the resin by hot pressing. The improvement which comprises the steps of coating the rough pressing or moulding blank wet-on-wet with an aqueous dispersion or emulsion, or solution adjusted to alkalinity of a thermosetting film forming binder from the group of polyurethane resins, applying a plastics covering consisting of a plastics foil of polyvinyl chloride, polyvinylidene chloride, polyethylene, polypropylene, or copolymers of polyethylene, and polypropylene, to the rough pressing or moulding blank, before removing the water by vacuum from the mass of fibrous material, and shaping and curing the resin material by hot pressing.

**Revendication**

Procédé de fabrication d'une pièce moulée portant un revêtement de matière synthéthique à partir d'une fibreuse aqueuse acidifiée, imprégnée de résines naturelles et/ou synthétiques et formée de matière fibreuses à base de fibres cellulosiques, de fibres de bois, de pâte de bois mécanique, de fibres de papier, de fibres de laine, de fibres de coton, de poils, de fibres synthétiques, de fibres de verre, de fibres d'amiante ou de mélanges de ces matières à l'état d'ébauches ou de flans sous forme tissée et/ou non tissée, procédé consistant à éliminer l'eau de la masse fibreuse par dépression, à opérer le formage avec durcissement de la résine par pressage à chaud et à appliquer le revêtement de matière synthétique, procédé caractérisé par le fait que l'on utilise comme revêtement de matière synthétique une feuille de polychlorure de vinyle, de polychlorure de vinylidène, de polyéthylène, de polypropylène ou de produits de copolymérisation d'éthylène et de propylène ou de produits de copolymérisation d'éthylène et de propyléne et qu'avant d'éliminer l'eau et d'effectuer le formage, on pose le revêtement sur l'ébauche ou le flan après avoir appliqué à celui-ci, l'état humide, une dispersion, émulsion ou solution aqueuse alcalinisée de liants formant des films thermodurcissables et choisis dans le groupe des résines de polyuréthane.